# EUROPÄISCHE PATENTANMELDUNG

(11) **EP 1 585 333 A2**
(43) Veröffentlichungstag der Anmeldung: **12.10.2005**
(21) Anmeldenummer: 04029419.1
(22) Anmeldetag: 13.12.2004
(51) Int. Cl.: H04N 7/24

(54) **Verfahren zum Aufbereiten, Übertragen und Darstellen interaktiver Datendienste auf DVB-Endgeräten**

(30) Priorität: 19.12.2003 DE 10360431
(71) Anmelder: TechnoTrend AG, 99092 Erfurt (DE)
(72) Erfinder: Richardt, Guido, Dipl.-Inf., 99974 Mühlhausen (DE); Zwinkau, Frank, Dipl.-Ing., 99085 Erfurt (DE); Franke, Volker, Dipl.-Ing., 99510 Apolda (DE); Six, Michael, Dipl.-Ing., 99092 Erfurt (DE)
(74) Vertreter: Stern, Wolfgang

(57) **Zusammenfassung**

Die Erfindung betrifft das digitale Fernsehen, bei dem die Übertragung mittels DVB über Satellit, Kabel oder terrestrische Ausstrahlung erfolgt. Wie von den Angeboten des Internet gewohnt, verlangt der Endnutzer vom digitalen Fernsehen mehr Informationen und mehr Interaktivität auch im Heimbereich. Mit der heutigen DVB-Technologie ist es möglich, dass zusätzlich zu den MPEG-kodierten Video- und Audiodaten weitere Datendienste angeboten werden können. Auf dem MHP-Standard basierende Lösungen setzten beim Endnutzer leistungsstarke preisintensive Empfänger voraus. Gegenstand der Erfindung ist ein Verfahren, zum Aufbereiten, Übertragen und Darstellen interaktiver Datendienste, bei dem die erforderlichen DVB-Endgeräte dem Heimbereich entsprechend preisgünstig realisierbar sind. Die darzustellenden HTML-Seiten entsprechen nach ihrer Konvertierung weiterhin dem HTML-Standard und können dadurch auf technisch einfache Weise mit herkömmlichen HTML-Browsern korrekt dargestellt werden, ohne dass dafür Rechenleistung des DVB-Empfängers benötigt wird. Die Erweiterung der eingesetzten HTML-Sprache ermöglicht die Anpassung der HTML-Seiten an den TV-Bildschirm sowie ebenso die Erweiterung des Funktionsumfanges der DVB-Endgeräte.

## Beschreibung

Die Erfindung betrifft das digitale Fernsehen, bei dem die Übertragung mittels DVB über Satellit, Kabel oder terrestrische Ausstrahlung erfolgt. Wie von den Angeboten des Internet gewohnt, verlangt der Endnutzer vom digitalen Fernsehen mehr Informationen und mehr Interaktivität auch im Homebereich. Mit der heutigen DVB-Technologie ist es möglich, dass zusätzlich zu den MPEG-kodierten Video- und Audiodaten weitere Datendienste angeboten werden können. Dies führt zu einer weiteren Verschmelzung der Medien Fernsehen und Internet, das Fernsehen wird zum interaktiven Fernsehen.

Um dem Anliegen des interaktiven Fernsehens gerecht zu werden, wurde der MHP-Standard erarbeitet. Dieser Standard setzt aber beim Endnutzer relativ leistungsstarke, technisch aufwendige Empfänger voraus, die noch immer sehr preisintensiv sind. Diese Situation hat bisher die Verbreitung von MHP-fähigen Endgeräten sehr behindert, was wiederum die Programmanbieter davon abhält, in größerem Umfang Programme mit MHP-fähigen Inhalten zu produzieren und zu senden.

Eine Lösung zum Darstellen von Internetinhalten auf einem Fernsehgerät ohne aufwendige PC-Set-Top-Boxen ist bereits aus der DE 101 13 867 A1 bekannt. Danach müssen die mit dem digitalen Fernsehsignal übertragenen und empfangnen HTML-Seiten so modifiziert werden, dass von jeder darzustellenden HTML-Seite ein Bildschirmabzug generiert und als Bitmapdatei abgelegt werden kann. Diese Bitmapdatei wird im Weiteren in ein MPEG2-Videostandbildformat konvertiert (MPEG-I-Frame). Die HTML typischen Verlinkungen werden in eine separate Verlinkungsdatei konvertiert. Verlinkungsdatei sowie MPEG-I-Frame-Daten werden dann zyklisch über ein Datenkarussell gesendet. Mit der hier erforderlichen Konvertierung geht ein großer Teil der ursprünglichen Funktionalität eines HTML-Dienstes verloren.

Es ist daher Aufgabe der Erfindung, ein Verfahren zum Aufbereiten, Übertragen und Darstellen interaktiver Datendienste auf DVB-Endgeräten zu schaffen, bei dem die erforderlichen DVB-Endgeräte dem Heimbereich technisch angepasst und dementsprechend preisgünstig realisierbar sind. Auf dem DVB-Endgerät soll ein Browser zum Anzeigen von Datendiensten eingesetzt werden können, mit Merkmalen, die ein aus der PC-Welt her bekannter HTML-Browser mit sich bringt. Die zu übertragenden HTML-Datendienste sollen sich durch einfache Konvertierungstools in HTML-Datendienste für DVB-Endgeräte umwandeln lassen.

Diese Aufgabe wird durch ein Verfahren mit den Merkmalen des Patentanspruchs 1 gelöst. Vorteilhafte Modifikationen des erfindungsgemäßen Verfahrens sind in den Unteransprüchen angegeben.

Die Vorteile der Erfindung bestehen insbesondere darin, dass die darzustellenden HTML-Seiten im DVB-Empfangsgerät nach ihrer Konvertierung in ein MPEG-I-Frame weiterhin dem HTML-Standard entsprechen und dadurch auf technisch einfache Weise mit herkömmlichen HTML-Browsern korrekt dargestellt werden können. Auf diese Weise können MPEG-I-Frames als TV-Bild dargestellt werden, ohne dass dafür Rechenleistung des DVB-Empfängers benötigt wird. Auch auf Empfangsgeräten mit einer niedrigen Rechenleistung können somit umfangreiche und grafisch aufwendige HTML-Seiten verarbeitet werden.

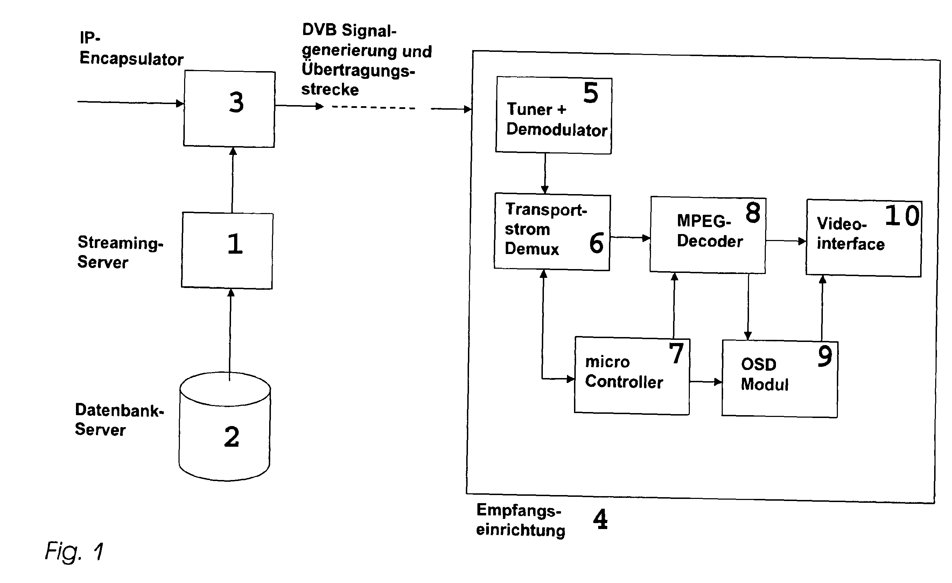

Die Erfindung wird im folgenden an einem Ausführungsbeispiel und dem in der Figur 1 dargestellten Blockschaltbild näher beschrieben.

Die Erfindung benutzt die Übertragung zusätzlicher Informationen zu Audio- und Video-Daten in DVB-Transportströmen. Audio- und Videodaten werden in DVB als MPEG kodierte Daten übertragen. Daneben gibt es gemäß DVB-Standard mehrere Möglichkeiten, parallel dazu Datendienste zu übertragen. Die hier beschriebene Erfindung benutzt das Verfahren der Multi-Protokoll-Encapsulation (MPE). Dabei werden die Zusatzdaten als IP-Daten übertragen, d.h. sie werden in ein IP-Paket eingepackt und versendet. Innerhalb dieser IP-Pakete ist die Verwendung beliebiger Protokolle gestattet und ermöglicht damit die Realisierung verschiedenartigster Dienste.

Die Erfindung ist so ausgelegt, dass ein Rückkanal vom DVB-Empfänger zum Sender nicht erforderlich ist. Das bedeutet, dass der gesamte Content permanent gesendet wird. Dies geschieht in Form von so genannten Datenkarussellen. Der Empfänger hat lediglich die Möglichkeit aus diesem Datenangebot auszuwählen. Gegenstand der beschriebenen Erfindung ist es deshalb, Übertragungsprotokolle, Datenformate und Transportmechanismen so zu organisieren, dass ein möglichst großes Datenvolumen angeboten werden kann.

Der Streaming-Server 1 übernimmt die gesamte Protokollaufbereitung entsprechend der im Weiteren beschriebenen Protokolle. Dazu bekommt er die vom Datenbank-Server 2 bereitgestellten Informationsinhalte sowie alle Informationen über den Sendekanal sowie die Einstellungen für den zeitlichen Ablauf der Sendung sowie deren Datenraten. Aus diesen Informationen werden die Datenkarusselle generiert. Diese Datenkarusselle werden mit der voreingestellten Datenrate kontinuierlich zum IP-Encapsolator 3 transportiert.

Im Datenbank-Server 2 werden all die Informationen, die als zusätzliche Datendienste über das DVB-Netzwerk ausgesendet werden sollen, gespeichert. Ebenso sind hier die Sendeinformationen abgelegt. Auf dem Datenbank-Server können ebenso alle Tools zur Generierung und Aufbereitung der Datendienste ausgeführt werden. Für die Zuspielung der Daten stehen FTP-Server sowie WEB-Interfaces zur Verfügung.

Das Einfügen der so generierten IP-Datenströme in einen MPEG-2-Transportstrom übernimmt der IP-Encapsulator 3. Er kapselt die IP-Pakete in sogenannten MPE-Sections. Diese MPE-Sections werden in Transportstrompakete unterteilt und in den Transportstrom eingefügt.

Als Empfangseinrichtung 4 dienen DVB-Empfangseinheiten, die sowohl für den Empfang digitaler DVB Signale über Satellit und Kabel als auch für den terrestrischen Empfang geeignet sind. Diese Empfangseinrichtungen können sowohl DVB-Set-Top Boxen sein als auch PC's mit DVB-Receiverboards mit integriertem Browser. Die Empfangseinrichtung 4 besteht im Wesentlichen aus dem Tuner/Demodulator 5, dem Transportstrom-Demultiplexer 6, dem MPEG-Decoder 8, dem Microcontroller 7, dem OSD-Modul 9 und dem Video-Interface 10. Der Microcontroller 7 übernimmt die gesamte Steuerung des DVB-Empfängers. In ihm wird ebenfalls der HTML-Browser ausgeführt. Der Tuner/Demodulator 5 wird auf den zu empfangenden Sender abgestimmt. Im Transportstrom-Demultiplexer 6 wird der gewünschte Datenstrom ausgewählt. Das Hintergrundbild des HTML-Dienstes wird dann dem MPEG-Decoder 8 zugeführt. Die übrigen Dateien des HTML-Dienstes werden im Microcontroller 7 verarbeitet. Der Microcontroller 7 berechnet daraus das Layout der HTML-Seite und übergibt es dem OSD-Modul 9. Das OSD-Modul 9 erhält außerdem vom MPEG-Decoder 8 den decodierten MPEG-I-Frame des Hintergrundbildes und generiert durch Überlagerung des Hintergrundbildes mit dem HTML-Layout die komplette HTML-Seite. Diese HTML-Seite wird über das Video-Interface 10 dem Anzeigegerät zur Verfügung gestellt.

Wichtigster Bestandteil des erfindungsgemäßen Verfahrens ist die Übertragung von internetähnlichen Seiten auf DVB-Empfängern. Diese HTML Seiten werden erfindungsgemäß unter Verwendung herkömmlicher HTML-Editoren erstellt. Die verwendete HTML-Sprache muss dem Standard HTML3.2 genügen, darüber hinaus gibt es Erweiterungen in Form zusätzlicher HTML-Tags. Diese Tags dienen der Verbesserung der Darstellbarkeit der HTML-Seiten auf TV-Schirmen sowie dem Erweitern des Funktionsumfanges herkömmlicher HTML-Seiten in Bezug auf TV-Umgebungen.

Die einzelnen Tags werden nachfolgend beschrieben:
- Hintergrundbild
- TV gerechter Font
- Access Keys
- Referenzen zu anderen Datenkanälen
- DVB Service Change
- Exit
- DVB-Object
- PIN-Abfrage

Zur Verbesserung der Leistungsfähigkeit der DVB-Endgeräte sowie der Erhöhung des Funktionsumfanges werden spezielle Tools und Verfahren zur Contentaufbereitung eingesetzt.

### Hintergrundbild-Erstellung

Die HTML-Seiten werden mittels eines Konvertertools (I-Frame-Konverter) vor dem Aussenden überarbeitet. Dabei werden möglichst viele grafische Elemente (GIF, BITMAP) einer HTML-Seite in das Hintergrundbild übernommen. Dieses Hintergrundbild ist ein MPEG-I Frame. Der MPEG-Encoder im Empfänger ist in der Lage, diesen MPEG-I-Frame als TV-Bild darzustellen, ohne dass dafür Rechenleistung des DVB-Empfängers benötigt wird. Diese Methode gestattet es auch Empfangsgeräten mit niedriger Rechenleistung umfangreiche und grafisch hochwertige HTML-Seiten zu verarbeiten. Die Farbtiefe der Hintergrundbilder beträgt 16 Millionen Farben. Der I-Frame-Konverter überarbeitet automatisch alle Referenzen der ersetzten grafischen Objekte und produziert als Ausgabefiles das neue Hintergrundbild sowie die modifizierte HTML-Datei. In Unterscheidung zu allen bisher bekannten, ähnlichen Verfahren entsprechen die mit dem I-Frame-Konverter bearbeiteten Seiten nach wie vor dem HTML-Standard und können so auch mit beliebigen HTML-Browsern richtig angezeigt werden. Das bringt große Vorteile bei der Generierung von HTML-Seiten für TV-Geräte, weil der speziell aufbereitete Content sofort auf Richtigkeit überprüft werden kann.

### TV gerechter Font

Um die Lesbarkeit von Textinformationen gewährleisten zu können, wird ein speziell für TV-Anwendungen optimierter Font eingesetzt.

### Access Keys

Jeder Link in der HTML-Seite kann mit dem Attribut "accesskey" versehen werden. Damit wird das Navigieren durch die HTML-Seiten über die Infrarot-Fernbedienung des DVB-Empfängers ermöglicht.

### Referenzen zu anderen Datenkanälen

Werden mehrere Datenkanäle ausgestrahlt, so kann mittels der in der HTML-Seite enthaltenen Links zwischen den Kanälen gewechselt werden.

### DVB Service Wechsel

Die HTML-Seite kann einen Link enthalten, der einen DVB Service Wechsel ausführt.

### Exit

Mit dem Link EXIT gelangt der Anwender aus dem HTML-Browser zurück in den Fernseh-Modus.

### DVB-Objekt

Das Tag DVB-Objekt definiert in der HTML-Seite ein Fenster zum Darstellen des aktuellen Fernsehbildes.

### Pin-Abfrage

Das Tag Pin-Abfrage erzwingt die Eingabe einer Ziffernfolge, um bestimmte Bereiche des HTML-Angebotes nur autorisierten Personen zugänglich zu machen.

## Patentansprüche

1. Verfahren zum Aufbereiten, Übertragen und Darstellen interaktiver Datendienste auf DVB-Empfangsgeräten, bei dem die Übertragung der digitalen Fernsehsignale über Satellit, Kabel oder terrestrische Ausstrahlung erfolgt, **dadurch gekennzeichnet, dass** die grafischen Informationen der HTML-Seiten vor dem Senden mittels eines Konvertertools in MPEG-I-Frames konvertiert werden, die HTML-Seiten weiterhin dem HTML-Standard entsprechen und mit auf den DVB-Empfangsgeräten installierten HTML-Browsern darstellbar sind.

2. Verfahren nach Anspruch 1, **dadurch gekennzeichnet, dass** die HTML-Seiten sendeseitig so aufbereitet werden, dass sie auf Fernsehbildschirmen darstellbar sind.

3. Verfahren nach Anspruch 1, **dadurch gekennzeichnet, dass** der MPEG-I-Frame, der die grafischen Elemente der Original-HTML-Seite in Form eines Background-Images enthält, zum DVB-Empfangsgerät übertragen wird und vom DVB-Empfangsgerät decodiert und dargestellt wird.

4. Verfahren nach Anspruch 1, **dadurch gekennzeichnet, dass** die HTML-Seiten sendeseitig so aufbereitet werden, dass durch die Definition neuer HTML-Tags eine Erweiterung des Funktionsumfanges des DVB-Empfangsgerätes erreicht wird.

5. Verfahren nach den Ansprüchen 1 bis 4, **dadurch gekennzeichnet, dass** die HTML-Seiten senderseitig so aufbereitet und erweitert werden, dass sie nach wie vor mit Standard- HTML-Browsern dargestellt werden können.

6. Verfahren nach Anspruch 1, **dadurch gekennzeichnet, dass** die HTML-Seiten in beliebiger gemischter Form zusammen mit dem eigentlichen Videobild des eingestellten Empfangskanals am DVB-Empfangsgerät dargestellt werden können.
